# EUROPEAN PATENT APPLICATION

(11) **EP 0 704 165 A2**
(43) Date of publication of application: **03.04.1996**
(21) Application number: 95113900.5
(22) Date of filing: 05.09.1995
(51) Int. Cl.: A23G 7/00, A23G 9/22, A23G 9/30

(54) **Hatch-cover for machines used in the treatment of liquid or pasty products**

(30) Priority: 09.09.1994 IT MI941844
(71) Applicant: GIANT S.r.l., I-41100 Modena (IT)
(72) Inventor: Zonari, Otello, I-40126 Bologna (IT)
(74) Representative: Marietti, Giuseppe

(57) **Abstract**

A hatch-cover for a machine used in the preparation of liquid or pasty products comprises a mobile closing element for the product discharge-hatch of the machine, one or more openings on the same closing element serving to be aligned with the discharge-hatch to allow delivery of the product. External to the closing element, corresponding to the discharge-hatch, there are conduits having such shape and size as to prevent the introduction of a hand into the treatment chamber of the machine through the opening when the latter is aligned with the discharge-hatch.

## Description

The present invention relates to a hatch-cover for machines used in the treatment of liquid or pasty products and typically but not exclusively for ice-cream makers and cream-cookers. These machines are generally used in the preparation of various types of food products e.g. nougat, chocolate, confectionery creams etc.

Machines of this type already known in the art use various types of hatch-cover with the main function of closing the product delivering opening of the machine during the treatment of the product, while allowing it to be removed when the treatment is complete. This function is achieved by a closing element mobile between a position obstructing the discharge-hatch and a position in which this discharge-hatch is freed, allowing the removal of the product.

The hatch-cover must furthermore be capable of being opened or removed to allow frequent cleaning and normal maintenance operations on all the elements which come into contact with the product being worked.

In any case, it must conform to the accident-prevention regulations and, in particular, it must not allow a finger to be inserted through the discharge-hatch into the interior of the container where the product is being worked and which houses rotating stirrer parts, when said hatch is not obstructed by the closing element.

In the known art, the most widespread solution to this problem is the use of a grille, comprising suitably-spaced vertical and parallel bars in the discharge-hatch opening. This prevents fingers being introduced through the hatch opening.

One of the main shortcomings of this known technique is caused by many products containing food in the form of pieces e.g. nuts, candied peels, fruits, etc. These food elements in pieces can accumulate behind the grille when the product is being unloaded and hinder - if not obstruct entirely - the delivery of the product.

Even if they don't totally obstruct the discharge-hatch, these pieces accumulating behind the grille must always be removed before beginning the treatment of the next batch. This may necessitate the opening or removal of the hatch-cover with consequent waste of time.

A further drawback of the known types of hatch-cover is that opening the hatch often causes uncontrollable sprays of product, particularly when the product is liquid and the container is full.

An object of the present invention is to overcome the drawbacks of the prior art while dealing with the accident-prevention regulations.

Within the scope of this object, another object is to produce a hatch-cover which allows liquid or paste products containing food in pieces to be delivered without the accumulation of these pieces in the vicinity of the discharge-hatch.

Another object of the present invention is to ensure a high level of safety under all working conditions of the machine, i.e. both in normal production of any product and during cleaning and maintenance operations which require the opening or removal of the hatch-cover.

A further object of the present invention is to provide a hatch-cover which can deliver the product without undesirable sprays of the same product.

These objects are achieved by the present invention which relates to a hatch-cover for a machine used in the treatment of liquid or pasty products, the machine comprising a container for the treatment of the product and a discharge-hatch located at one end of the container, as well as rotating elements inside the container to mix or stir the product, characterized in that it comprises a mobile closing element to close said discharge-hatch and at least a first delivering opening located on said closing element and which can be brought into alignment with the discharge-hatch in order to allow the delivery of the product, and in that it further comprises a conduit located externally to said closing element in correspondence to said first delivering opening, the conduit being of such a shape and size as to prevent the introduction of a hand into the container through said first delivering opening and the discharge-hatch.

In particular, the conduit is located externally to the closing element and shows a substantially truncated cone form with the greater base turned towards the outside with respect to the closing element, and its lesser base towards the discharge-hatch.

The truncated-cone shape of the conduit allows the delivery of the product because the food in pieces, if present, is not blocked by any obstacle. The length of the conduit and its minimum diameter prevent the insertion of the fingers as far as the rotating stirrer elements inside the container where the product is being treated.

According to a preferred embodiment of the present invention, the closing element can rotate between a position obstructing the discharge-hatch and a position in which the discharge-hatch and the delivering opening are substantially aligned. Moreover, means are provided to prevent the further rotation of the closing element beyond its position in which the discharge-hatch and the delivering opening are mutually aligned.

This allows to facilitate the opening and closing of the hatch-cover using a suitable handle which is integral with the closing element.

According to another embodiment of the present invention, the closing element comprises a second delivering opening smaller than the first one, as well as a conduit located externally to the closing element in correspondence to said second delivering opening.

The second opening, smaller than the first one, allows the product to be unloaded without unwanted splashing which occurs when the product is predominantly liquid in consistency or when the treatment chamber is full. A conduit placed in correspondence to said second opening prevents, together with the opening small sizes, fingers for being inserted into the interior of the treatment chamber.

In the embodiment wherein a second delivering opening is foreseen, the closing element can be rotated in one direction between a position of obstructing the discharge-hatch and a position substantially aligning the hatch and the first delivering opening. Moreover, the closing element can be rotated in the opposite direction between the position of obstructing the discharge-hatch and a position substantially aligning the hatch and the second delivering opening.

In this case, together with the already-mentioned means for preventing further rotation of the closing element, means are foreseen for retaining the closing element in its intermediate position obstructing the discharge-hatch.

In general, whatever the embodiment of the hatch-cover according to the invention, means are provided for fixing the closing element in a detachable way while allowing its rotation, as well as a means for interrupting the electrical supply to the motor driving the mixing or stirring means in case of removal of the closing element from the machine.

This prevents the activation of the stirring means when the hatch-cover is removed and the discharge-hatch is directly open to the outside.

In particular, the means for fastening the closing element comprise at least one pivot with a longitudinal through-hole coaxial with the pivot axis and threaded externally at its extremities, one of which is inserted into a corresponding threaded hole in at least one flange positioned coaxially with the discharge-hatch and integral with the machine.

There is a through-hole on the closing element and a supporting ferrule on the outside of the closing element, aligned with the hole. The ferrule supports one or more bushes situated between the external surface of the pivot and the internal surface of the ferrule itself to facilitate the rotation of the hatch-cover in relation to the pivot. There is a knob with a threaded through-hole which screws onto the pivot on the end opposite to that inserted into said flange.

The means for interrupting the electricity supply comprise a microswitch integral with the machine and located in proximity to the flange, together with a rod to activate the microswitch. The activating-rod comprises at one end a second knob integral with the rod itself and fitted with a threaded hole coaxial with the rod axis.

The rod can be slidingly fitted in the longitudinal through-hole of the pivot to actuate the microswitch, while the second knob integral with the rod is screwed onto the end of the pivot superimposed on the first knob.

This makes for a high level of security since, before removing the closing element by unscrewing the first knob, it is necessary to remove the microswitch-actuating rod by unscrewing the second knob which blocks the first one. In this way the rod is removed, thus interrupting the electricity supply to the motor driving the stirring means.

These and other advantages will appear clearer from the following description of the present invention which is of an illustrative and not limiting nature and refers to the attached drawings in which :
- fig.1 is a front view of a the hatch-cover according to the invention;
- fig.2 is a top view of the hatch-cover of fig.1 with some elements partially in section;
- fig.3 is a cross-sectional view showing a detail of a machine and a hatch-cover fitted thereon;
- fig.4 is a plan view of a detail of the hatch-cover according to the invention;
- fig.5 is an exploded view of the means for fastening the hatch-cover to the machine;
- fig.6 is a front view of another embodiment of a hatch-cover according to the present invention;
- fig.7 is a cross-sectional view showing a detail of a machine and a hatch-cover according to the embodiment shown in fig.6;
- fig.8 shows two views of a detail of the hatch-cover shown in fig.7;
- fig.9 is a cross-sectional view, from the side, of the hatch cover according to the embodiment shown in fig.6.

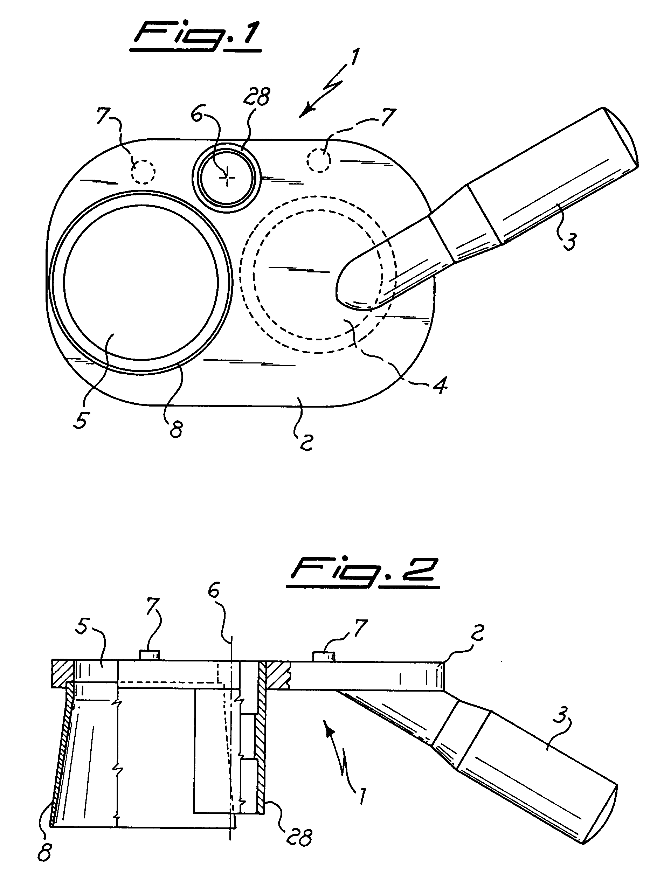

Figs 1 and 2 show a hatch-cover 1 which comprises a closing element 2 to which a handle 3 is attached. The latter allows the movement of the closing element 2 between a position of obstructing the discharge-hatch 4 (represented by broken lines in fig.1) and a position in which the delivering opening 5, directly cut into the closing element 2, is substantially in alignment with the discharge-hatch 4 as a result of a rotational movement around the axis 6. Stop pins 7 are provided to limit the rotation of the closing element 2 between the two previously-mentioned positions only.

A conduit 8 is located on the outside with respect to the closing element 2, in correspondence with the delivering opening 5. The conduit 8 has a shape and sizes such as to prevent the introduction of a hand through the opening 5 and the discharge-hatch 4 when these are aligned. The conduit 8 has preferably a truncated cone shape with its wider end facing outward with respect to the closing element 2 and its narrower base located in correspondence to the delivering opening 5 on the closing element 2.

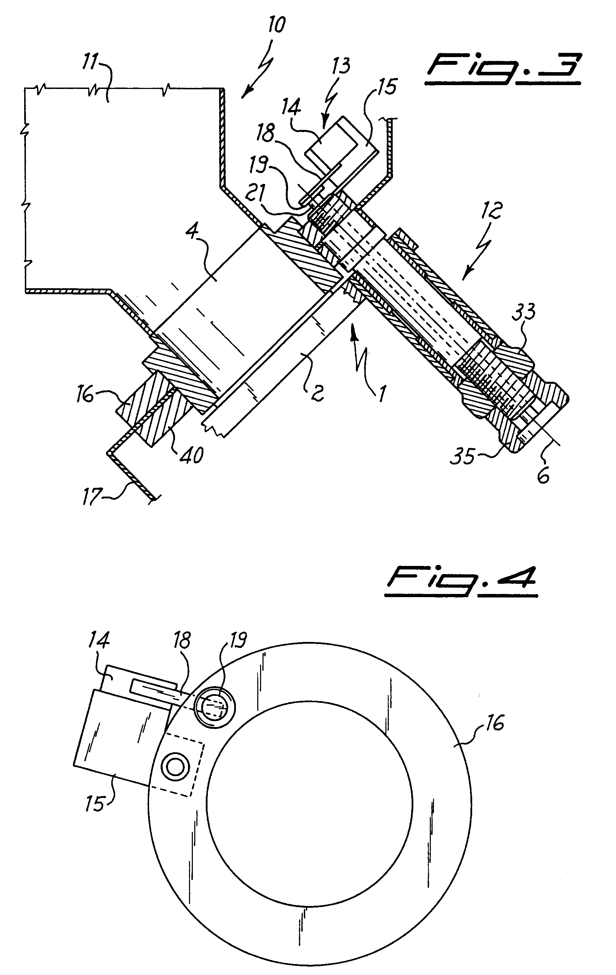

Fig. 3 shows a detail of a machine 10 and of fastening means 12 for a hatch-cover 1 according to the present invention. The machine 10 comprises a treatment chamber 11 inside which there are generally means (not shown) for mixing or stirring the product. The chamber 11 is fitted with an discharge-hatch 4 which remains obstructed during the treatment of the product by the closing element 2.

The means 12 allow the attachment in a removable way of the hatch-cover 1 and its rotation around the axis 6.

To ensure conformity with the safety regulations when the hatch-cover 1 is removed, means 13 are further provided for interrupting the electrical supply to the motor driving the means of mixing or stirring.

With reference to figs. 3 and 4, said means 13 for interrupting the electrical supply comprise a microswitch 14 which is fixed to a bracket 15, mounted on a flange 16 integral with the chassis 17 of the machine 10. The mobile element 18 of the microswitch 14 is preferably fitted with a disk 19 located on its free side. During normal operation of the machine 10, the microswitch 14 remains in its conducting mode due to a pressure of the rod 21 on the disk 19.

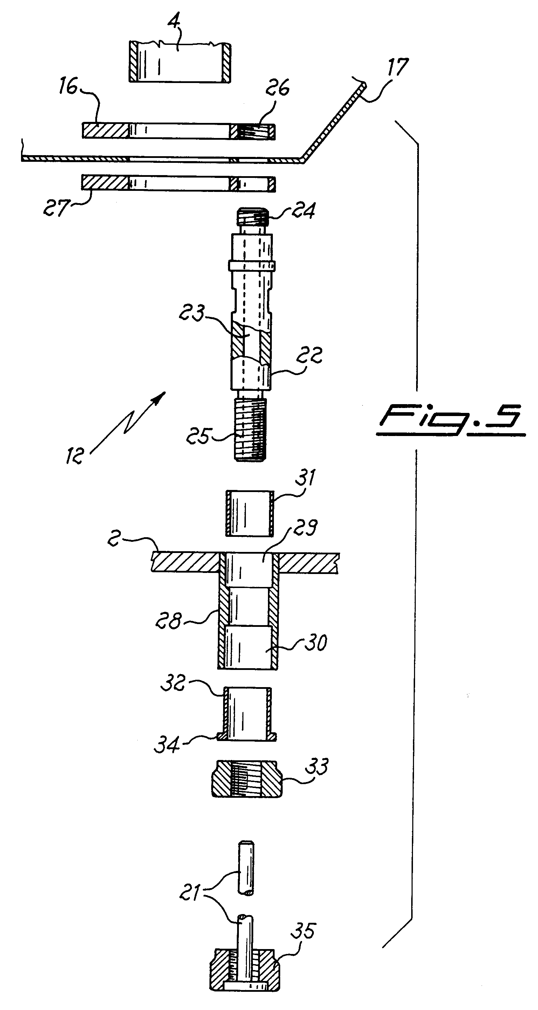

Fig.5 shows in greated detail the means 12 for removably fastening the hatch-cover 1 to the machine 10. The fastening means 12 comprise in detail a pivot 22 fitted with a longitudinal through-hole 23 coaxial with the pivot axis. The pivot 22 is also fitted with external threads on its extremities 24 and 25.

The extremity 24 can be screwed into a corresponding threaded hole 26 in the flange 16. The latter is fixed in an already known manner, e.g. by means of screws, inside the chassis 17 of the machine 10 and to a flange 27 located on the outside of the body 17. The flanges 16 and 27 are coaxial with the discharge-hatch 4.

The closing element 2 has a through hole into which is inserted a short supporting tube 28 which extends externally with respect to the closing element 2. There are seats 29 and 30 cut into the interior of the tube 28 to house corresponding bushes 31 and 32 to facilitate the rotation of the hatch-cover 1 around the pivot 22.

A first knob 33 can be screwed onto the threaded extremity 25 of the pivot 22, said knob 33 having a correspondingly threaded through-hole to fix the hatch-cover 1 to the machine 10. The knob 33 presses on an end of the bush 32, preferably having a raised edge 34 with respect to the tube 28 to allow the fastening of the hatch-cover 1 without impeding the rotation thereof around the pivot 22.

The rod 21 which actuates the microswitch 14 can be slidingly fitted in the longitudinal through-hole 23 of the pivot 22 and shows at one end thereof a second knob 35 integral with it. The knob 35 is in turn drilled with a threaded hole coaxial with the rod 21.

Once the rod 21 has been inserted into the longitudinal through-hole 23 of the pivot 22, the knob 23 is screwed onto the threaded extremity 25 of the pivot 22 superimposing the first knob 33 which fixes the hatch-cover 1 to the machine 10, as can be seen in fig.3.

This layout is very advantageous from the safety point of view. To remove the hatch-cover 1, the knob 33 must be unscrewed, but this cannot be done until the knob 35 to which is attached the actuating rod 21 of the microswitch 14, is first removed. Unscrewing the knob 35 and removing the rod 21 interrupts the electrical supply to the motor driving the mixing or stirring means which turn inside the treatment chamber 11. The successive removal of the hatch-cover 1 after the knob 33 has been removed allows access to the interior through the discharge-hatch 4 without the danger of accidentally starting the rotating stirring means inside the chamber 11.

Figs. 6 to 9 show a second embodiment of a hatch-cover 100 according to the present invention. The elements it shares in common with the embodiment shown in figs 1 to 5 are identified with the same reference numbers.

In particular, the hatch-cover 100 comprises a closing element 2 where a second delivering opening 102 is fitted, which is smaller than the first opening 5. In correspondence to the second opening 102, there is a conduit 103, e.g. cylindrical in shape, which has a diameter and length sufficient to prevent fingers being introduced. The second opening 102 allows the product to be delivered without the unwanted splashing which occurs when the product is predominantly liquid and the treatment chamber is full.

In this embodiment too, the closing element 2 can be rotated in one direction between a position of obstructing the discharge-hatch 4 and a position substantially aligning the hatch 4 and the first delivering opening 5. The closing element 2 can be rotated in the opposite direction between the position of obstructing the discharge-hatch 4 and a position substantially aligning the hatch 4 and the second delivering opening 102.

In this case, besides the already mentioned means 7 to prevent further rotation of the closing element 2, there are means 101 and 104 for keeping the closing element 2 in the intermediate position of obstructing the discharge-hatch 4. In particular, the closing element 2 is fitted with a pivot 101 with a rounded end to locate into a corresponding cavity 105 on a stop plate 104 (see Fig.8). The stop plate 104 is slightly bowed to facilitate the engagement of the pivot 101 in the locking cavity 105 when the closing element 2 is rotated into the position of obstructing the discharge-hatch 4.

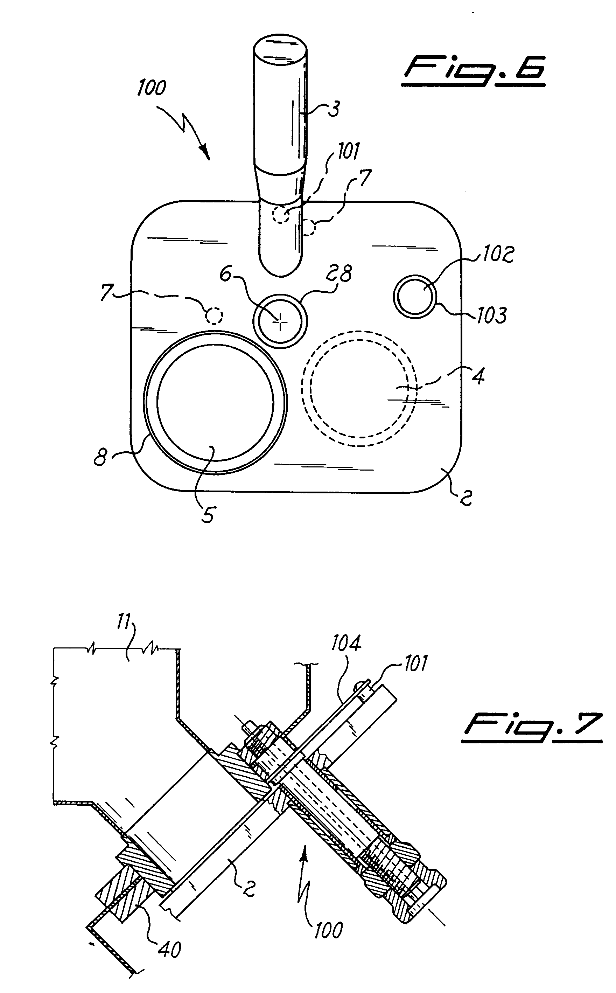

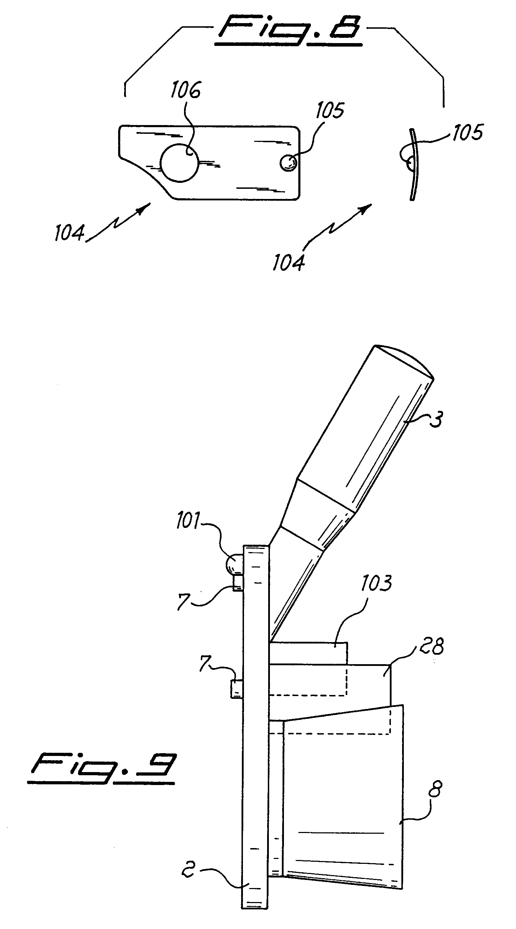

The locking plate 104 has a through-hole 106 to allow it to be attached between the flange 40 and the pivot 22 as shown in fig.7.

## Claims

1. Hatch-cover for a machine used in the treatment of liquid or pasty products, the machine comprising a container for the treatment of the product and a discharge-hatch located at one end of the container, as well as rotating elements inside the container to mix or stir the product, characterized in that it comprises a mobile closing element to close said discharge-hatch and at least a first delivering opening located on said closing element and which can be brought into alignment with the discharge-hatch in order to allow the delivery of the product, and in that it further comprises a conduit located externally to said closing element in correspondence to said first delivering opening, the conduit being of such a shape and size as to prevent the introduction of a hand into the container through said first delivering opening and the discharge-hatch.

2. Hatch-cover according to claim 1, characterized in that said conduit is substantially a truncated cone in shape, with its larger base facing outward with respect to said closing element and its smaller base located in a position corresponding to said first delivering opening in the closing element.

3. Hatch-cover according to claim 1, characterized in that said closing element is mobile in rotation between a position of obstructing the discharge-hatch and a position substantially aligning said hatch and said first delivering opening.

4. Hatch-cover according to claim 1, characterized in that said closing element comprises a second delivering opening smaller than said first delivering opening, as well as a conduit located externally to said closing element in correspondence to said second delivering opening.

5. Hatch-cover according to claim 4, characterized in that said closing element is rotatable in one direction between a position of obstructing the discharge-hatch and a position substantially aligning said hatch and said first delivering opening, and rotatable in the other direction between a position of obstructing the discharge-hatch and a position substantially aligning said hatch and said second delivering opening.

6. Hatch-cover according to claim 5, characterized in that it comprises means for keeping said closing element in said position obstructing said discharge-hatch.

7. Hatch-cover according to any of the preceding claims, characterized in that it comprises means to prevent further rotational movement of said closing element beyond said positions in substantial alignment with the discharge-hatch and said delivering openings.

8. Hatch-cover according to any of the preceding claims, characterized in that it comprises means for removably fastening said closing element in such a way to allow its rotation, as well as a means for interrupting the electrical supply to the motor driving said product mixing or stirring means in case of removal of said closing element from the machine.

9. Hatch-cover according to claim 8, characterized in that said means for fastening said closing element comprise: at least one pivot having a longitudinal through-hole coaxial with the pivot itself and having an external screw-thread on its end portions, one of said ends being engaged in a corresponding threaded hole on at least one flange positioned coaxially to said discharge-hatch and integral with the machine body; a through-hole in said closing element and a supporting ferrule positioned on the external part of said closing element in alignment with said through-hole; one or more bushes positioned between the external surface of said pivot and the internal surface of the supporting ferrule; and at least a first knob having a threaded through-hole which can be screwed to the end of said pivot opposite with respect to said end screwed to said flange.

10. Hatch-cover according to claim 8 or 9, characterized in that said means of interrupting the electrical supply comprise a microswitch integral with said machine and positioned near said flange, as well as a rod to actuate said microswitch, said rod having at its end a second knob integral with the rod and having a threaded inner hole coaxial with the axis of said rod.

11. Hatch-cover according to claim 10, characterized in that said rod is slidingly fitted in the longitudinal through-hole of said pivot to actuate said microswitch, the second knob integral with said rod serving to be screwed to the end of said pivot in a position superimposed on said first knob.
